# DEMANDE DE BREVET EUROPEEN

(11) **EP 1 348 734 A1**
(43) Date de publication de la demande: **01.10.2003**
(21) Numéro de dépôt: 03290784.2
(22) Date de dépôt: 27.03.2003
(51) Int. Cl.: C08L 33/08, C08L 23/08, C08L 23/02

(54) **Composition élastomerique soudable à haute fréquence**

(30) Priorité: 28.03.2002 FR 0203943
(71) Demandeur: Pennel Industries S.A., 59100 Roubaix (FR)
(72) Inventeur: Roussel, Marcel, Residence le Moulin de Barbieux, 59100 Roubaix (FR)
(74) Mandataire: Blot, Philippe Robert Emile

(57) **Abrégé**

La présente invention a pour objet une composition soudable à haute fréquence, caractérisée en ce qu'elle comprend en poids au moins :
1. 10 % à 90 % d'un copolymère ou terpolymère à base d'au moins un acrylate ou dérivé ;
2. 25 % à 90 % d'un composant polyoléfinique,
3. 5 % à 50 % d'un polymère dit compatibilisant et
4. 5% à 50% d'un agent ignifugeant.

Elle vise en outre l'utilisation d'une telle composition pour la fabrication de feuilles soudables à haute fréquence notamment utiles pour l'habillage intérieur automobile.

## Description

La présente invention vise à proposer une composition élastomérique soudable à haute fréquence. Ces compositions ont pour intérêt principal de conduire sous une forme extrudée ou calandrée à des produits présentant des propriétés avantageuses, notamment pour la fabrication de feuilles d'habillage intérieur dans l'industrie automobile.

Depuis de nombreuses années, les feuilles de PVC sont largement utilisées pour l'habillage intérieur des véhicules automobiles, et plus particulièrement pour celui des tableaux de bord et des portières.

Toutefois, certains inconvénients sont associés à la mise en oeuvre du PVC. Outre ceux liés à l'utilisation de plastifiants, tels que le « fogging » (évaporation de constituants volatils, en particulier des plastifiants) ou la fragilisation dans le temps, le PVC ne s'avère pas compatible avec la plupart des autres polymères utilisés dans l'industrie automobile. Cette incompatibilité nécessite donc de séparer les pièces en PVC des autres pièces automobiles avant leur éventuel recyclage.

Des compositions à base de polyoléfines, en particulier à base d'un homopolymère ou copolymère du propylène, ou de l'éthylène, et/ou de copolymère éthylène-acétate de vinyle éthylène-acrylate ont déjà été proposées à titre de substituts au PVC. Toutefois, les copolymères éthylène-acétate de vinyle (EVA) et éthylène-acrylate (EMA, EEA, EBA) possèdent de très faibles tenues températures. En conséquence, ces produits utilisés seuls ne sont valorisables que pour des applications à des températures ambiantes. Pour améliorer leurs tenues à températures, il a été proposé de les associer à des polyoléfines qui possèdent de meilleures résistances à hautes températures. Malheureusement, l'avantage n'est pas significatif et, de plus, la soudabilité HF du produit diminue rapidement avec le pourcentage de polyoléfine incorporé avec l'EVA. Enfin, il est important de préciser que ce type de mélange demeure difficile à travailler, notamment par calandrage (mélange trop fluide).

En l'occurrence, il existe donc à ce jour un besoin pour un matériau nouveau manifestant les mêmes propriétés intrinsèques du PVC plastifié, à savoir tenue à haute et basse températures, soudabilité à haute fréquence et souplesse (avec la possibilité de le recycler aisément), facilité de mise en oeuvre, et possédant en outre de bonnes propriétés en terme de résistance à la propagation de flamme.

La présente invention vise principalement une composition soudable à haute fréquence pouvant notamment se substituer avantageusement aux mélanges évoqués précédemment.

Plus précisément, la présente invention a pour premier objet une composition soudable à haute fréquence caractérisée en ce qu'elle comprend en poids au moins :
1. 10 % à 90% d'un copolymère ou terpolymère à base d'au moins un monomère (meth)acrylate ou dérivé,
2. 25 % à 90% d'un composant polyoléfinique et
3. 5 % à 50 % d'un polymère dit compatibilisant
4. 5 % à 50 % d'un agent ignifugeant.

Avantageusement, l'association à la résine polyoléfinique d'un copolymère ou terpolymère à base de (meth)acrylate permet de donner satisfaction à l'ensemble des exigences suivantes :
- bonne processabilité du mélange élastomère réglant l'opération du calandrage,
- bonne tenue en température,
- bonne résistance à l'ensoleillement,
- bonne résistance au froid,
- propriétés mécaniques adéquates,
- bonne résistance à la propagation de la flamme,
- très peu de fogging et,
- bonne soudabilité par hautes fréquences.

Selon une variante préférée, la composition revendiquée comprend au moins :
- 20 % à 40 % en poids d'un copolymère ou terpolymère à base d'au moins un monomère (meth)acrylate, ou dérivé,
- 40 % à 60 % d'un composant polyoléfinique,
- 5 % à 25 % d'un polymère dit compatibilisant et
- 5% à 30% d'un agent ignifugeant.

L'utilisation d'un élastomère thermoplastique à base d'acrylates ou dérivé est particulièrement intéressante dans la mesure où elle permet d'assurer au moins deux, voire trois propriétés à travers les différents types de composés le constituant. En l'occurrence, le caractère élastomérique est apporté par le composant acrylate, ce dernier confère également une polarité suffisante au mélange pour réagir aux sollicitations électriques.

Au sens de la présente invention, on entend couvrir sous le terme « (meth)acrylate » les acrylates d'alkyle en C₁ à C₂₀ et methacrylate d'alkyle en C₁ à C₂₀ linéaires ou ramifiés.

Selon une variante préférée de l'invention, les motifs (méth)acrylates constituent au moins 30 % en poids, et de préférence entre 50% et 90% en poids dudit copolymère ou terpolymère.

A titre illustratif de ces acrylates, on peut plus particulièrement citer le (méth)acrylate de méthyle, le (méth)acrylate d'éthyle, le (méth)acrylate de propyle et le(méth)acrylate de butyle.

L'acrylate ou dérivé est généralement associé à un ou deux autres monomères pour former un copolymère ou terpolymère.

A titre illustratif de ces monomères associés, on peut plus particulièrement citer le styrène, le méthyl-styrène, l'éthylène, le propylène, l'acrylonitrile et l'acétate de vinyle.

Selon une variante préférée de l'invention, ce premier composé associe au (méth)acrylate considéré au moins un monomère de styrène ou dérivé.

De préférence, le composé 1 se présente sous la forme d'un terpolymère.

Plus précisément, il s'agit d'un terpolymère de type acrylonitrile/ styrène/acrylate de n-butyle. Plus préférentiellement, il comprend environ 75 % en poids d'acrylate de n-butyle.

Sous le terme « composant polyoléfinique », on désigne conformément à l'invention un homopolymère ou copolymère oléfinique ou leurs mélanges et en particulier des homopolymères ou copolymères thermoplastiques oléfiniques (TPO) comme, par exemple, le polyéthylène, le polypropylène, leurs mélanges ou copolymères et dérivés.

A titre illustratif de ce composé 2, on peut plus particulièrement citer :
- les polyéthylène, polypropylène et copolymères d'éthylène avec au moins une alphaoléfine,
- des copolymères éthylène avec au moins un motif dérivant :
   (i) d'un (méth)acrylate d'alkyle en C₁ à C₂₀ et/ou,
   (ii) d'un acétate de vinyle et,
- des caoutchoucs issus de mélanges de polypropylène avec des EPDM (ethylène-propylène-diène monomères).

Le mélange de deux ou plusieurs de ces polyoléfines peut être utilisé.

De préférence, ce composé 2 est choisi parmi les :
- polyéthylène ou polypropylène et
- copolymère d'éthylène et d'une alpha-oléfine comme l'octène.

A ces deux composés 1 et 2, est associé un agent dit compatibilisant.

Cet agent a pour vocation d'assurer une bonne compatibilité entre les différents constituants du mélange. En l'occurrence, il s'agit d'un polymère qui engendre des interactions d'ordre physique entre les chaînes macromoléculaires. Il assure ainsi une bonne cohésion et une bonne répartition entre le composant polyoléfinique à caractère non ou faiblement polaire et le copolymère ou terpolymère (méth)acrylate à caractère plus polaire.

Généralement, ce polymère compatibilisant comporte, au sein de sa structure, des fonctions polaires et apolaires de manière à manifester des affinités chimiques vis-à-vis des deux autres constituants du mélange.

A titre illustratif de cet agent compatibilisant, on peut plus particulièrement citer les copolymères ou terpolymères de types :
- éthylène-acétate de vinyle,
- éthylène-propylène-acétate de vinyle,
- éthylène-(meth)acrylate d'alkyle en C₁ à C₂₀,
- éthylène-(meth)acrylate d'alkyle en C₁ à C₂₀-anhydride maléique,
- éthylène-(meth)acrylate d'alkyle en C₁ à C₂₀ - méthacrylate de glycidyle,
- éthylène-acétate de vinyle-anhydride maléique et
- éthylène-acétate de vinyle- méthacrylate de glycidyle.

Est plus particulièrement préféré dans le cadre de la présente invention à titre d'agent compatibilisant le terpolymère à base d'éthylène/acrylate de méthyle/méthacrylate de glycidyle. Plus préférentiellement sa teneur en poids en monomère méthacrylate de glycidyle varie de 5 à 10 % et de préférence est de l'ordre de 8%.

Le mélange revendiqué comprend en outre un agent ignifugeant dit composant 4. Cet agent a pour fonction de ralentir les mécanismes d'inflammation et de propagation de flammes au sein du matériau pour garantir les normes de sécurité au sein de l'habitacle du véhicule.

Cet agent ignifugeant est généralement composé de deux produits :
- l'hydroxyde d'alumine, Al(OH)₃, libérant des molécules d'eau au sein du matériau au cours d'une inflammation ; et
- un composé organique de type polyphosphate d'ammonium, offrant un deuxième mécanisme d'ignifugation en synergie avec l'hydroxyde d'alumine. Le composé organique crée un revêtement intumescent en surface du matériau, qui limite les transferts de chaleur et la diffusion d'oxygène dans le matériau, ce qui limite sa dégradation. Cette couche protectrice formée de carbone expansé évite la tombée de gouttelettes enflammées.

Les deux produits sont utilisés dans des proportions voisines. Ainsi, le constituant 4 est généralement composé de 20% à 80% en poids d'hydroxyde d'alumine et de 20% à 80% en poids du composé organique à base de phosphore et d'azote.

Selon une variante préférée de l'invention, la composition revendiquée est exempte de polymère de type PVC et EVA. Elle est également de préférence sans halogène.

A titre illustratif d'une composition conforme à l'invention on peut plus particulièrement citer celles comprenant :
- 10 à 90% de préférence 20 à 50 % d'un terpolymère acrylonitrile/styrène/acrylate
- 25 à 90% de préférence 20 à 50 % d'un copolymère polyéthylène/alphaoléfine,
- 25 % à 50 % d'un homopolymère oléfinique comme par exemple le polypropylène,
- 5 à 20 % d'un terpolymère éthylène/acrylate de méthyle/ methacrylate de glycidyle et
- 10 à 30 % d'un mélange composé de 50% d'hydroxyde d'alumine et 50 % d'un polyphosphate d'ammonium.

Bien entendu, la composition revendiquée peut comprendre d'autres additifs susceptibles de lui conférer des propriétés annexes. Les quantités de ces additifs sont ajustées de manière à ce qu'elles ne puissent affecter la thermoformabilité et/ou l'aptitude du soudage à haute fréquence de la composition revendiquée. Il peut notamment s'agir de charges, telles que le carbonate de calcium, les silicates de calcium, le talc, la silice, le mica ou de l'oxyde d'aluminium. Ces charges peuvent être introduites en une quantité pouvant atteindre jusqu'à 20% en poids par rapport aux composants 1, 2, 3 et 4. De même, on peut envisager d'introduire dans ladite composition des agents antibloquants, des lubrifiants, des agents antioxydants, des colorants, des pigments, des agents antistatiques, des agents actifs vis-à-vis des UV. Ces additifs sont normalement contenus en quantité pouvant atteindre jusqu'à 20% en poids par rapport au poids des composants 1, 2, 3 et 4.

La composition polymérique peut être obtenue par simple mélange mécanique des différents constituants.

La présente invention concerne également l'utilisation d'une composition telle que décrite ci-dessus pour la préparation d'une feuille.

La feuille ainsi obtenue peut avantageusement être grainée, colaminée ou laquée en ligne après son extrusion. Elle peut également subir des traitements de ce type, ultérieurement à sa production.

Les feuilles calandrées ainsi obtenues présentent un très bel aspect et une excellente stabilité dimensionnelle. On n'observe pas de fluage de la feuille lors du calandrage. De même, on obtient une bonne résistance à la température. En l'occurrence, le grain appliqué sur la feuille peut demeurer implanté au-delà de 130°C, d'où une meilleure résistance aux hautes températures que les mélanges à base d'EVA.

En ce qui concerne la soudabilité par haute fréquence, le matériau dérivé des compositions revendiquées s'avère plus réactif aux sollicitations électriques et donc nécessite avantageusement moins d'énergie.

L'invention concerne également les feuilles soudables à haute fréquence obtenues à partir d'une composition conforme à l'invention. Elle s'étend en outre aux structures multicouches dont au moins une couche est une feuille telle que décrite ci-dessus.

Elle concerne également l'utilisation de ces feuilles destinées à l'habillage intérieur dans l'industrie automobile.

Les exemples présentés ci-après le sont à titre illustratif et non limitatif de l'invention revendiquée.

### Exemple 1

La composition testée est obtenue par mélange de :
- 25 % d'un terpolymère acrylonitrile/styrène/acrylate commercialisé sous la désignation « Sunigum P7395 » ®. (75 % en poids en acrylate)
- 25 % en poids d'une polyoléfine de type polyéthylène-octène, commercialisé sous le nom de « Engage 8540 » ®.
- 25 % de polypropylène commercialisé sous le nom de « Hifax CA 10A » ® et
- 8,5 % d'un terpolymère éthylène-ester acrylique-méthacrylate de glycidyle à titre d'agent compatibilisant, commercialisé sous le nom de Lotader AX8900®.
- 16,5 % d'un mélange composé à 50% d'hydroxyde d'alumine commercialisé sous le nom de Martinal 104® et 50% de polyphosphate d'ammonium commercialisé sous le nom de Exolit AP750®.
   Cette composition peut être transformée en feuille soudable par haute fréquence selon les deux modes de réalisation suivants :

### a) par extrusion

On mélange mécaniquement les différents constituants. Ce mélange est réalisé dans une extrudeuse monovis où le mélange est porté à une température de l'ordre de 200 °C. Le mélange est ensuite passé à travers une filière plate disposée en sortie d'extrudeuse. L'agent ainsi formé est ensuite conformé en feuille par passage entre deux cylindres. La température du cylindre est maintenue entre 150°C et 200°C.

### b) par calandrage

Les différents constituants de la composition précédente sont mélangés et portés à fusion dans un mélangeur interne par exemple de type Inthermix ®. Le mélange est ensuite filtré à l'aide d'une boudineuse-filtreuse préalablement à son calandrage.

Les feuilles obtenues à partir de chacune de ces compositions ont été testées pour leurs propriétés mécaniques, leur résistance aux UV et leur tenue thermique.

### - Propriétés mécaniques

Les propriétés mécaniques sont mesurées par un test de traction sur un instrument de traction Zwick®. L'échantillon possède une longueur de 50 mm et 25 mm de largeur pour 0.5 mm d'épaisseur et la vitesse de traction est de 100 mm/min.

### - Résistances aux UV

La résistance aux UV est testée par exposition de l'échantillon au rayonnement Xénon procuré par un appareillage CI3000, pendant 150 heures à 100°C.

### - Tenue thermique

Le comportement thermique est mesuré sur une feuille à la surface de laquelle il a été implanté un grain d'aspect. Cette résistance thermique est appréciée après un séjour de 100 heures à 100°C ou de 30 minutes à 130°C. On test également la fragilité du matériau à froid, -20°C.

### - Mesure de l'embuage ("fogging")

Le matériau est placé dans un appareillage de type HAAKE® pendant trois heures à 100°C. On mesure le % reflectance résiduel d'une plaque de verre disposé au dessus de l'échantillon.
- Résistance mécanique des soudures réalisées par soudures hautes fréquences.
   Sur une éprouvette de 5 cm par 10 cm pour 0,5 cm d'épaisseur, on réalise une soudure en formant une boucle dans le sens de la longueur. La soudure prend toute la largeur de l'éprouvette soit 5 cm. Sur une machine de traction "appareillage de la société Zwick", on mesure la résistance de la boucle par pellage.
- Vitesse de propagation horizontale de la flamme, norme automobile ISO 3795 ou FMVUSS 302.

Un échantillon de 10 cm par 30 cm pour 0,5 cm d'épaisseur est placé horizontalement dans un appareillage type ATLAS®, le produit est enflammé et l'on mesure la vitesse de combustibilité sur 254 mm de longueur.

### Résultats :

Une feuille obtenue à partir d'une composition conforme à la présente invention possède une résistance à la rupture de l'ordre de 12 Mpa, un allongement à la rupture de 400%. Après exposition prolongée aux UV, on ne note aucune variation d'aspect du produit ni de dérive de couleur. De même, le produit n'est pas fragilisé. En ce qui concerne la tenue thermique, après un séjour de 100 heures à 100°C, on n'observe aucune variation dimensionnelle de l'échantillon, de même qu'aucune altération de son aspect extérieur en termes de propriétés mécaniques ou d'intensité des couleurs. Enfin, un chauffage à 130°C pendant 30 minutes n'altère pas non plus la rétention du grain implanté. Pas de fragilisation du produit après 2 heures à-20°C. Les résultats de fogging indique une réflectance résiduelle de 90%. La résistance rupture de la soudure est de l'ordre de 34 N/cm. Enfin le vitesse de combustibilité n'excède pas les 60 mm/min.

Outre ces résultats, intrinsèques à la composition de la présente invention, il est possible de réaliser un comparatif entre une formulation soudable par hautes fréquences à base d'EVA et la formulation de la présente invention.

La composition de la formulation à base d'EVA est la suivante :

C1 : Copolymère éthylène-acétate de vinyle dont le pourcentage en poids de monomère acétate de vinyle est de 40%, commercialisé sous le nom d'''ELVAX 40L03®". Copolymère propylène-éthylène, commercialisé sous le nom d'''HIFAX CA10A®" et Homopolymère à base de propylène, commercialisé sous le nom de "PROFAX PF814®".

| Composants | % pondéraux en poids |
|---|---|
| C1 | 57 |
| C2 | 29 |
| C3 | 10 |
| Additifs | 4 |

Les essais réalisés sont des mesures de fluidités à 190°C, les écarts enregistrés sont assez importants. Les mesures sont réalisées sur un appareillage de la société CEAST, "Melt Flow Junior®". Elles consistent à mesurer la masse de matière chaude s'écoulant à travers une filière de diamètre fixe sous un poids donné et pendant un temps donné, plus communément appelé indice de fluidité ou "melt flow index". Les résultats sont reportés dans le tableau **1** ci-dessous.

**TABLEAU 1**

| **Mélanges soudables par hautes fréquences** | **Indice de fluidité à chaud (190°C)** |
|---|---|
| Formule à base d'EVA | 3.95 g/10 min sous 2,16 kg |
| Formule de la présente invention | 3.95 g/10 min sous 10 kg |

En l'occurrence, les mesures sur les deux formulations n'ont pas pu être réalisées dans les mêmes conditions. En effet, la formule à base d'EVA possède une fluidité trop importante pour mesurer son indice de fluidité à 190°C sous 10 kg. A contrario, la formule de la présente invention est trop visqueuse et rien ne s'écoule de la filière à 190°C sous 2,16 kg. La viscosité à chaud de la formule à base d'EVA est donc bien inférieure à celle de la présente invention. Cette différence de comportement rhéologique impose des procédés de fabrication particulier pour ces deux formulations, notamment pour le calandrage et le grainage des feuilles. On précise dans le tableau 2 ci-dessous les températures de transformation au cours de ces deux étapes du procédé de fabrication pour ces deux formulations.

**TABLEAU 2**

| **Mélanges soudables par hautes fréquences** | **Calandrage, température des cylindres** | **Température de grainage** |
|---|---|---|
| Formule à base d'EVA | 145 °C | 150°C |
| Formule de la présente invention | 175°C | 180°C |

La formulation à base d'EVA ne peut se calandrer au delà de 145°C afin de conserver une viscosité adéquate. De même se température de grainage est limitée, 150°C, contre 175°C pour la formulation de la présente invention. Cet écart de 25°C durant le grainage est à l'origine de la différence de rétention du grain à haute température, 130°C pour la formulation selon l'invention et 110°C pour la formulation à base d'EVA.

## Revendications

1. Composition soudable à haute fréquence, **caractérisée en ce qu'**elle comprend en poids au moins :
1. 10 % à 90 % d'un copolymère ou terpolymère à base d'au moins un monomère (méth)acrylate ou dérivé ;
2. 25 % à 90 % d'un composant polyoléfinique,
3. 5 % à 50 % d'un polymère dit compatibilisant et
4. 5% à 50% d'un agent ignifugeant.

2. Composition selon la revendication 1, **caractérisée en ce qu'**elle comprend au moins :
- 20 % à 40 % en poids d'un copolymère ou terpolymère à base d'au moins un monomère (meth)acrylate ou dérivé ;
- 40 % à 60 % d'un composant polyoléfinique,
- 5 % à 25 % d'un polymère dit compatibilisant et
- 5% à 30% d'un agent ignifugeant.

3. Composition selon la revendication 1 ou 2, **caractérisée en ce que** le monomère (meth)acrylate du copolymère ou terpolymère n° 1 est choisi parmi les acrylate et methacrylate d'alkyle en C₁ à C₂₀ linéaires ou ramifiés.

4. Composition selon l'une des revendications 1 à 3, **caractérisée en ce que** les monomères (meth)acrylates du composé 1 constituent au moins 30 % en poids et de préférence entre 50 % et 90 % en poids dudit copolymère ou terpolymère.

5. Composition selon l'une des revendications précédentes, **caractérisée en ce que** le composé 1 associe aux monomères (meth)acrylate au moins un monomère choisi parmi le styrène, le méthyl-styrène, l'éthylène, le propylène, l'acrylonitrile et l'acétate de vinyle.

6. Composition selon la revendication 5, **caractérisée en ce que** le monomère associé est ou dérive du styrène.

7. Composition selon l'une des revendications précédentes, **caractérisée en ce que** le composant 1 se présente sous la forme d'un terpolymère.

8. Composition selon l'une des revendications précédentes, **caractérisée en ce que** le terpolymère est de type acrylonitrile/styrène/acrylate de n-butyle.

9. Composition selon l'une des revendications précédentes, **caractérisée en ce que** le composant polyoléfinique n° 2 comprend au moins un homopolymère et/ou copolymère thermoplastique oléfinique, tels que le polyéthylène, le polypropylène, leurs mélanges ou copolymères et dérivés.

10. Composition selon l'une des revendications précédentes, **caractérisée en ce que** le composé 2 est choisi parmi :
- les polyéthylène, polypropylène et copolymères d'éthylène avec au moins une alphaoléfine,
- des copolymères éthylène avec au moins un motif dérivant :
(i) d'un (meth)acrylate d'alkyle en C₁ à C₂₀ et/ou,
(ii) d'un acétate de vinyle et,
- des caoutchoucs issus de mélanges de polypropylène avec des EPDM (ethylène-propylène-diène monomères).

11. Composition selon l'une des revendications précédentes, **caractérisée en ce que** l'agent compatibilisant est choisi parmi les copolymères et les terpolymères de type :
- éthylène-acétate de vinyle,
- éthylène-propylène-acétate de vinyle,
- éthylène-(meth)acrylate d'alkyle en C₁ à C₂₀,
- éthylène-(meth)acrylate d'alkyle en C₁ à C₂₀-anhydride maléique,
- éthylène-(meth)acrylate d'alkyle en C₁ à C₂₀ - méthacrylate de glycidyle,
- éthylène-acétate de vinyle-anhydride maléique et
- éthylène-acétate de vinyle- méthacrylate de glycidyle.

12. Composition selon l'une des revendications 1 à 11, **caractérisée en ce que** l'agent compatibilisant est un terpolymère à base d'éthylène/acrylate de méthyle/méthacrylate de glycéride.

13. Composition selon l'une des revendications précédentes **caractérisée en ce que** l'agent ignifugeant est composé d'hydroxyde d'alumine et d'un polyphosphate d'ammonium.

14. Composition selon l'une des revendications précédentes **caractérisée en ce qu'**elle comprend :
- 10 à 90% de préférence 20 à 50 % d'un terpolymère acrylonitrile/styrène/acrylate
- 25 à 90% de préférence 20 à 50 % d'un copolymère polyéthylène/alphaoléfine.
- 25 % à 50 % de polypropylène,
- 5 à 20 % d'un terpolymère éthylène/acrylate de méthyle/méthacrylate de glycidyle.
- 10 à 30 % d'un mélange composé de 50% d'hydroxyde d'alumine et 50 % d'un polyphosphate d'ammonium.

15. Utilisation d'une composition selon l'une des revendications 1 à 14 pour la préparation d'une feuille.

16. Utilisation d'une composition selon l'une des revendications 1 à 14 pour la préparation d'une feuille destinée à l'habillage intérieur dans l'industrie automobile.

17. Feuille soudable à haute fréquence et ignifuge obtenue à partir d'une composition selon l'une des revendications 1 à 14.
